# EUROPEAN PATENT SPECIFICATION

(11) **EP 2 956 518 B1**
(45) Date of publication and mention of the grant of the patent: **31.07.2019**
(21) Application number: 14751869.0
(22) Date of filing: 18.02.2014
(51) Int. Cl.: C08G 63/60, C09J 167/00

(54) **ADHESIVE COMPOSITION AND METHOD**
HAFTZUSAMMENSETZUNG UND VERFAHREN
COMPOSITION ADHÉSIVE ET PROCÉDÉ

(30) Priority: 18.02.2013 US 201361766000 P
(43) Date of publication of application: 23.12.2015
(73) Proprietor: Danimer Scientific LLC, Bainbridge, GA 39817 (US)
(72) Inventor: WANN, Steven, R., Bainbridge, GA 39819 (US)
(74) Representative: Boult Wade Tennant LLP
(86) International application number: PCT/US2014/016921
(87) International publication number: WO 2014/127362

(56) References cited:
- WO-A1-97/20899
- DE-A1-102004 019 273
- JP-A- 2002 371 259
- US-A- 5 753 782
- US-A1- 2006 252 842
- US-A1- 2008 039 582
- US-A1- 2010 255 228

## Description

### FIELD

The present invention relates to adhesive compositions for attaching labels to plastic surfaces, especially OPP labels attached to external surfaces of PET-based plastics used to make modern plastic beverage bottles.

### BACKGROUND

Each year millions of pounds of polyethylene terephthalate (PET) are used as the plastic of choice for thermoformed and molded consumer packaging materials and containers, such as plastic beverage bottles and the like. Due to rapidly dwindling supplies of petroleum and other non-renewable resources conventionally used to provide the polymeric constituency of most plastics, coupled with steadily increasing demand for such materials and associated increases in the price of the same, there has commenced an enormous, worldwide effort to attain the maximum possible percentage of recovery/recycle of all post-consumer plastics, especially those derived from non-renewable resources.

Unfortunately, a considerable portion of post-consumer plastic contains a range of different contaminant substances which can materially disaffect the value and/or usefulness of the plastic recyclate. These contaminants include, but are not limited to, embedded colorant, direct printing dyes, bits and pieces of plastic and/or paper labeling or other substances, and adhesive, the latter often being present in association with label material previously attached to the plastic substrate surface by the adhesive. In recovery/recycling operations, the above and other contaminants, if not completely separated or eradicated from the plastic recyclate, may be allowed to enter and re-enter the total mass of recyclate plastic material used to make finished goods. Over time, such a contaminant levels may grow to a relatively high proportion of the total mass of plastic available for making product. Accordingly, even very tiny percentages of such "contaminant" material, if allowed to be, in essence, continuously re-introduced, into and/or with recyclate streams, can be seen to present a serious and intolerable threat to the viability of the world's supply of material available for making plastic.

Hence, while many other problems must be overcome in the world's efforts to devise a consistently effective PET plastic recovery/recycle system, a primary challenge lies in the matter of devising an effective system for insuring essentially complete separation of any/all adhesive-backed labels and associated adhesive from PET recyclate, which are estimated by some, with current packaging/product designs, to present in such recyclate more than 50% of the time.

Accordingly, the problem of preventing introduction and essentially re-introduction of any significant amount of adhesive-based and other contaminant with recyclate incorporated into the world's supply of plastic is now or, in the very near future, will become, an absolute global imperative of the utmost importance.

In general, current systems for recovery of post-consumer plastic material destined for recycle generally first subject bulk supplies of plastic material to various separation/classification operations. These operations include, among other things, isolation of PET-based plastic items and further subdivision of the PET items based on various criteria such as degree/nature of coloration and the like. Then, after one or more additional preliminary operations, the items are generally subjected to one or more tearing, chopping, and/or other comminuting operations with the objective of preparing a supply of recyclable PET substrate in very small, relatively uniform-sized/shaped fragments a few inches in size, some of which may have a tiny bit by an even smaller amount of interposed hot melt or other adhesive material. In some cases, all or most of any label material formerly associated with a fragment of plastic may have already separated, leaving behind some small bit of adhesive residue on a surface of the PET fragment.

In an effort to completely remove any/all attached label, adhesive, or other contaminant material, these PET fragments are typically contacted with a hot, aqueous caustic solution under relatively mild mixing action for a time sufficient to permit the chemical agents to act on the adhesive to cause what is, in essence, a chemical breakdown of either the adhesive, or other deleterious effect on the same, so that the adhesive is completely removed from the surfaces of the plastic fragments, nor is any adhesive material able to re-attach to the plastic after release of the same. In general, the conditions for the caustic bath are maintenance of a temperature in the range of from about 60 to 80 degrees C and about 1-4% by weight caustic soda to provide a pH of at least about 11. The treatment time is said to be in the neighborhood of from about 15 to 30 minutes. Upon separation of the label/adhesive from the PET substrate, the latter reportedly gravity (or density/buoyancy) separates as a distinct layer in the bath, enabling recovery of the PET for further processing toward ultimate recycle. Water-based adhesives comprising polyesters which can be readily dissolved in caustic soda are known from JP2002-371259.

In theory, the process would appear to be quite well-suited for effective separation/isolation of the PET material for ultimate recycle. But reports indicate otherwise. Many deem the basic process to be less than fully satisfactory due, at least in part, to the appearance of unacceptably high residual adhesive left on the surfaces of the PET fragments (and in some cases, associated bits of label material, printing ink, and the like remaining on the plastic), leading to increasingly destructive contaminant levels in the ever-increasing portion of the total amount of PET collected for reuse/recycle that is made up of recyclate, which may be on its 1^{st}, 2^{nd}, 3^{rd}, etc. iteration through the recycle loop. In this regard, nominal contaminant levels in recyclate greater than 0.1 wt. %, essentially continuously allowed to enter into the world's supply of PET for new container/bottle manufacture, may be unacceptable in the long-term due to the eventual unacceptable degradation of overall PET material quality, according to EFBW/UNESDA.

Accordingly, it is apparent that adhesives used to affix labels to underlying PET surfaces of plastic bottles can and do negatively impact post-consumer PET recycling/recovery operations. Conventional adhesives reportedly do not readily or consistently release from PET substrate undersurfaces or disintegrate, dissolve, or otherwise break down for separation of the same from the plastic bottle material under the above-described caustic treatment processes. For example, adhesive residues left on the plastic substrate surface can gum up or otherwise adversely affect plastic recovery/recycling machinery, and can also react and/or carbonize during re-melting or reforming of the plastic in recycling operations, causing, among other things, haziness in or decollation of the plastic and also forming unsightly bits and pieces of char deposits, which can disaffect the aesthetics, functionality, hygienics, and other important properties/characteristics of the recycled plastic material. One consequence of this has been that, even though PET is considered to be among the most readily recycled plastics, recovery rates for post-consumer PET have remained relatively low, reportedly no more than about 20-25% in the USA. And, of course, as the bulk percentage of recyclate, as a portion of the total amount of PET in circulation, worldwide, inevitably continues to increases, the problem of decontamination will undoubtedly intensify, making this an increasingly important problem, which, as mentioned above, must be solved.

### SUMMARY

In general, invention relates to adhesive compositions useful for attaching labels to plastic surfaces, especially OPP labels attached to external surfaces of PET-based plastics used to make modern plastic beverage bottles, and wherein the compositions exhibit, among other things, improved solubility and/or release characteristics under the aqueous alkaline washing conditions typically used to clean and otherwise hygienify and prepare plastic material recovered from PET containers for recycling/reuse, consistent with global efforts to insure essentially contaminant-free PET recyclate entering into the overall supply of PET plastic, made up increasingly of recyclate material entering and re-entering the supply an indefinite number of times.

Compositions according to one preferred embodiment of the invention comprise adhesive compositions (also referred to herein, at times, as "formulation(s)" or "adhesive formulation(s)") characterized by the presence of a new bio-derived or bio-based polyester comprising a polypropylene succinate (PPS) and, in particular, a PPS which has been found to exhibit surprisingly beneficial properties, particularly when present in adhesive compositions formulated for attaching OPP labels to PET substrates such as PET-based plastic bottles and the like. It is known to produce PPS from renewable materials through the condensation reaction of succinic acid with 1, 3 propanediol. While PPS made from bio-based material is known to be available for use in label adhesive formulations, such materials exhibit certain drawbacks when exposed to the alkaline washing mediums typically used in the recycle processing/hygienification of post-consumer PET-based plastic materials having labels affixed thereto. Accordingly, one aspect of the invention is to include, in the reaction mixture, a suitable 3-dimethylol propane in place of all or a substantial portion of the 1,3-propanediol as a diol monomer, in an amount comprising at least about 4-25 mole %, based on the total amount of diol monomer used in the reaction mixture. This is believed to cause formation of a bio-based PSS copolymer or terpolymer according to the present invention for inclusion in an adhesive composition that exhibits substantially improved properties under the conditions of the hot caustic process washing step used to treat and hygienecize comminuted or other forms of post-consumer plastic material for the recovery/recycling of the material. The recovered plastic substrate material is believed to be substantially freed of any/all adhesive and associated label material previously attached to its surfaces. Accordingly, the invention enables considerably quicker, more complete, and more uniform recovery of reusable PET substrate plastic material with substantially reduced or completely eliminated amounts of measurable label/adhesive-associated contamination.

The above and other aspects of the invention will now be described in more detail in the following detailed description of one or more preferred embodiments of the same along with known attributes thereof which commend its beneficial application in helping attain the goal of more complete recovery of plastic bottle substrate.

### DETAILED DESCRIPTION

With respect to the above and other problems, adhesive compositions according to the present invention contribute positively to applications involving affixation of OPP labels and other such materials to PET surfaces, especially where ready release, separation, and/or disintegration of the adhesive material from the associated PET surface under alkaline aqueous conditions is an essential attribute; and in applications where it is essential that no significant residual adhesive enters downstream processing operations along with the PET recyclate after washing, scrubbing, and related post-consumer recovery operations, thus facilitating the goal of essentially unlimited recycling and ultimate re-use iterations of PET-based plastic articles and other similar recyclable plastic materials, as in the case of food grade uni- and multi-layer plastic, moldable materials conventionally used for plastic bottles, containers, and other such products. Additional advantages of the invention are that primary polymeric components of preferred embodiments of adhesive compositions according to the invention are preferably made from materials derived/derivable from non-petroleum, renewable resources; and that the properties of these polymeric components are such that they can be applied as part of an adhesive composition to label stock and/or other surfaces destined to be attached to PET surfaces in a relatively high temperature, flowable/extrudable state using conventional commercial hot melt/extrusion equipment and procedures. Further advantages are that, while conferring materially improved release from PET surfaces of post-consumer articles in the current hot caustic washing/scrubbing steps used in recycling operations coupled with the associated "green" characteristics, adhesive compositions according to the invention also exhibit good compatibility with the range of additional materials/additives conventionally used in such compositions and good shelf-life/handling attributes including, but not limited to, non-toxicity as a food-grade material, stability and durability in expected ranges of storage and shipping conditions and associated physical handling, shipping and ambient temperature/humidity cycling, endurance to cold/warm temperature storage conditions and associated ranges of external product surface moisture condensation/evaporation cycles, contact with spilled contents, and the like.

The present invention relates to adhesive compositions useful for attaching labels to plastic surfaces, especially OPP labels attached to external surfaces of PET-based plastics used to make modern plastic beverage bottles, and wherein the compositions exhibit, among other things, improved solubility and/or release characteristics under the aqueous alkaline washing conditions typically used to clean and otherwise hygienify and prepare plastic material recovered from PET containers for recycling/reuse, consistent with global efforts to insure essentially contaminant-free PET recyclate entering into the overall supply of PET plastic, made up increasingly of recyclate material entering and re-entering the supply an indefinite number of times.

Compositions according to one preferred embodiment of the invention comprise adhesive compositions (also referred to herein, at times, as "formulation(s)" or "adhesive formulation(s)") characterized by the presence of a new bio-derived or bio-based polyester comprising a polypropylene succinate (PPS) and, in particular, a PPS which has been found to exhibit surprisingly beneficial properties, particularly when present in adhesive compositions formulated for attaching OPP labels to PET substrates such as PET-based plastic bottles and the like. Generally speaking, PPS is a condensation polymer conventionally obtained from the polymerization of a reaction mixture comprising a diacid, succinic acid, and a diol, 1, 3-propanediol, together with an acid catalyst. PPS is reported to have been first described by Carothers in 1929.

It is known to produce PPS from renewable materials through the condensation reaction of succinic acid, such as the succinic acid material available from Myriant Corporation of Quincy, Massachusetts under the trade designation Bio-Succinic Acid, with 1, 3 propanediol, such as the bio-derived trimethylene glycol available from DuPont Late and Lyle Bio Products of Wilmington, Delaware under the trade name Susterra. As used herein, "bio-based" and "bio-derived" refers to the fact that the material is made substantially completely from non-petroleum materials that are also renewable or are obtained or produced primarily from renewable resources such as plants, bacteria, and the like. While PPS made from bio-based material is known to be available for use in adhesive formulations and such materials are, to an extent, biodegradable, known forms of such material have been found to exhibit sub-optimal solubility and other important characteristics in the alkaline washing mediums typically used in the recycle processing/hygienification of post-consumer PET-based plastic materials having labels affixed thereto using such adhesive formulations, hindering efforts to enable recovery of higher proportions of PET material which has been sufficiently freed of all associated label/adhesive and other undesirable material to achieve the strategically critical goal of maintaining an overall globally substantially pure PET recyclate in accordance with objectives of UNESDA, EFBW, and other government/industry initiatives.

In light of the above and other needs and objectives, it is a feature of the present invention to include, in the reaction medium for the polymerization of PPS, an appropriate amount of a suitable 3-dimethylol propane, or dimethylolpropionic acid (a/k/a "DMPA"), such as the DMPA material available from Perstorp of Toledo, Ohio, under the trade name Bis-MPA, in place of a substantial portion of the 1,3-propanediol, as an additional diol monomer in the reaction mixture. The DMPA comprises at least about 4-25 mole %, based on the total amount of diol monomer used in the reaction mixture, in order to cause formation of a bio-based PSS copolymer or terpolymer according to the present invention for inclusion in an adhesive composition according to the invention and to provide, in the composition, substantially improved solubility, disintegration, and/or release characteristics of the adhesive/label material under the conditions of the hot caustic process washing step used to treat and hygienecize comminuted or other forms of post-consumer plastic material for the recovery/recycling of the material, substantially freed of any/all adhesive and associated label material previously attached to its surfaces due, at least in part, to the use of an adhesive composition containing the herein-described inventive PSS polymeric material for substantially improved de-attachment of the adhesive composition and associated label material from the PET surface in the hot caustic medium for considerably quicker, more complete, and more uniform recovery of reusable PET substrate plastic material with substantially reduced or completely eliminated amounts of measurable label/adhesive-associated contamination.

Upon reaction with other materials in the condensation polymerization, the DMPA reactant is believed to cause formation of pendant carboxyl groups on the polymer, which groups in turn are believed to more readily activate (e.g., "ionize") in the hot aqueous caustic washing medium to form a carboxylate salt of the polymer with enhanced solubility or other release characteristics in the aqueous caustic medium. In addition to this enhanced solubility/release in the caustic solution and other advantages, the new ter- and/or co-polymers according to the invention exhibit surprisingly diminished tendancies to crystallize, one drawback of conventional PPS materials (such as those having melting points in the neighborhood of about 52°C), and with enhanced tackiness and other desirable properties in conjunction with other composition ingredients, as further surprising bonus effects.

Blends and/or mixtures of new bio-based PPS-co-bis MPA (50-80% by weight) according to the invention with other substantially water and/or aqueous alkaline soluble polymers which contain hydroxyl (e.g., LM 10 HD), carboxyl (C305), amido (K30), and/or other reactive functionalities are believed to yield a new family of adhesive compositions (see Table 1) with beneficial properties for use in affixing the commercially popular oriented polypropylene or "OPP" labels to PET surfaces with enhanced tenacity in/through expected use environments, and in enhanced dissolution in the aqueous alkaline mediums used in post-consumer recycling and other recovery processes for better and more complete de-attachment of the adhesive composition and the associated labels from PET plastic container surfaces in such environments. Adhesive compositions containing polymeric components in accordance with the invention are seen to exhibit dissolution rates in the order of 50-100% under aqueous alkaline wash conditions typically used to promote removal and de-attachment of adhesive-backed OPP labels from PET substrates. In addition, adhesive compositions in accordance with the invention exhibit >12 hr. resistance to significant property diminishment after submersion in ice water and exposure to heating at 60°C. Inventive formulations according to the invention also exhibit particularly good shelf life and pot life compared to existing OPP label adhesives.

Other aspects of the invention relate to methods of making the above-described new bio-based PPS polymers for use in providing improved adhesive compositions according to the invention, methods of providing and applying such adhesive compositions containing such PPS polymers to labels and for affixing labels containing the adhesive compositions to PET-based plastic surfaces including the external surfaces of plastic bottles and the like comprising PET as a principal component of the plastic, and to methods for treating post-consumer label and/or associated adhesive-bearing PET-based plastic bottles and other such containers wherein the adhesive composition attached thereto contains one or more embodiments of bio-based PSS polymers according to the present invention, and wherein the treatment comprises contacting the containers with a high temperature aqueous alkaline wash medium sufficient to cause at least substantially complete de-attachment of substantially all adhesive material from substantially all PET surfaces on the container.

It is believed that adhesive compositions according to the invention may be formulated in a manner similar to conventional adhesive compositions used for adhesive-backed OPP labels so long as any additives and other components do not interfere with the desired properties and functionality of the composition including, in particular, its rheology, stability, and related properties pertaining to its preferred application as a hot melt adhesive material to OPP and other similar label stock destined for attachment to PET-based bottles and other containers. Accordingly, it is believed adhesive compositions according to the invention may comprise, in conventional ranges of weight percentages, in addition to the inventive bio-based PSS polymeric constituent.

The following examples and/or provide further information pertaining to the present invention.

**Table 1. Bio-Based Label adhesive compositions for affixing labels to PET. (Percent dissolution refers to the weight percent of adhesive removed using an aqueous alkaline PET washing procedure.)**

| Component | Composition | | | | |
|---|---|---|---|---|---|
| | 92721 | 92496L | 92496 | 92466 | 92744 |
| PPS-co-DMPA, 4 mol% | 55 | 80 | | | |
| PPS-co-DMPA, 25 mol% | | | 80 | 70 | 54 |
| C305 | 45 | | | | 34 |
| PVP | | 15 | 15 | | |
| LMHD10 | | 5 | 5 | | |
| B60 | | | | 30 | 12 |
| **Dissolution In Caustic Wash, %** | **100** | **100** | **100** | **50** | **ND** |

| | | | | | |
|---|---|---|---|---|---|
| C305 and B60 (Wacker); PVP, K30 (BASF); LM 10HD (Kuraray); for PPS-co-DMPA. | | | | | |

Synthesis of PPS-co-DMPA terpolymer (4 mol% DMPA on a diol basis): A 455 L (100 gallon), glass-lined DeDietrich reactor (fitted with an oil heater, agitator, water-cooled condenser and vacuum pump) was charged with 76.0 kg (167.5 lb) succinic acid, (1.42 mol., Myriant) 48.0 kg (105. 9 lb) 1,3-propanediol, (1.39 mol., Sussterra™; DuPont Tate and Lyle) 3.4 kg (7.6 lb) bis-MPA (0.056 mol., Perstorp) and 0.13 kg (0.28 lb) tin (II) octoate (0.1% wt % of starting material, Alfa Aesar). The reactor was heated to a 160°C oil heater set point, and the agitator set to 50-75 rpm. Under atmospheric pressure, when the reaction temperature reached 254°C, water began to condense from the reactor at a rate of 120 ml/min. When the condensation rate had fallen to 80 ml/min the oil heater set point was increased to 163°C for 30 min and then the oil heater set point was increased 2-3°C every 30 min until 171 °C was reached. At this point about 17 kg (38 lb) of water (75% theoretical amount) was collected.

About 5 hr into the reaction and when 75% of the water had been removed, vacuum was applied to the reaction mixture. The pressure was reduced gradually in a stepwise fashion (about 50 torr every 30 min) over a 3-4 hour period. During this time the oil hearer set point was held constant at 171°C and additional 5 kg (11 lb) water was collected (90% theoretical). When a vacuum of about 4 MPa (30 torr) was achieved, the reaction mixture was heated for an additional five hr hours (approximately 14 hours total reaction time) until the product had the following properties: (1) a melt viscosity of 200 cP @ 127°C and (2) a volatile content (as determine by gravimetric loss of a sample heated to 180°C for 3 min) of 0.05-0.09%. At this time, 104 kg (230 lb) (82% yield) of a sticky, semi-liquid, amber colored material was emptied into a 208 L (55-gallon) drum.

Sample preparation and evaluation of adhesive dissolution: A simulated labeled PET container was constructed from 6 x 9 cm sections of OPP film (to represent the label) and similar sized section of PET film to represent the bottle. The mass of each film layer was recorded. A thin film of adhesive (about 20 gm/m²) was applied by drawing down the melted adhesive (150°C) with a glass rod across the surface of the PET film. Immediately after the adhesive was applied, a comparable size piece of OPP film was pressed down onto the adhesive to form a composite structure of the adhesive sandwiched between the two film layers. The amount of adhesive applied was determined by subtracting the weight of the films from the weight of the composite structure.

After 12-18 hr to set, the film/adhesive composite was sliced in 5 x 5 mm square sections to simulate shredding of the PET containers prior to washing. The pieces were then subjected to a washing treatment that followed the protocol developed by the Association of Plastic Recyclers for PET recycling. Briefly, the pieces (1% by weight - the approximate concentration of the PET covered with adhesive in a typical 2 L carbonated beverage container) were placed in a 88°C aqueous solution of 1% by weight sodium hydroxide and 0.3% triton X-100 and stirred vigorously (1,000 rpm) for 15 min. After two washes in tap water at a 1% label:wash water at room temperature, all the pieces of label were collected by filtration, dried at 40°C and reweighed. In Table 1, the amount of adhesive that remained associated with the film pieces is expressed as a percentage dissolved (1 - amt. retained/100).

Surface analysis of the film by FT-IR was also conducted on pieces of the film to look for traces of adhesive residue. The PPS-co-DMPA has a unique carbonyl peak (1720 cm⁻¹) that differentiates it from other carbonyl-containing components of the film and adhesive. No residue was ever found associated with the OPP. Any adhesive detected was always associated with the PET. Surface analysis indicated the amount of adhesive remaining in association with the PET to be vanishingly small and well below levels that could be detected gravimetrically.

## Claims

1. An adhesive composition which comprises a bio-derived copolyester comprising at least one diol monomer including a dimethylolpropionic acid unit and at least one diacid monomer including a succinic acid unit, together with one or more other constituents selected from the group consisting of a tackifier, a plasticizer, a film- forming agent, an antiblocking agent, water, an extender, a filler, a stabilizer, and a colorant, wherein the at least one diol monomer comprises from 4 mole % to 25 mole %, based on the total moles of diol monomer, of the dimethylolpropionic acid.

2. An adhesive composition according to claim 1 wherein the copolyester comprises polypropylene succinate.

3. A PET plastic container bearing a label attached thereto by an adhesive composition which comprises a bio-derived copolyester comprising at least one diol monomer including a dimethylolpropionic acid unit and at least one diacid monomer including a succinic acid unit, together with one or more other constituents selected from the group consisting of a tackifier, a plasticizer, a film-forming agent, an anti-blocking agent, water, an extender, a filler, a stabilizer, and a colorant, wherein the at least one diol monomer comprises from 4 mole % to 25 mole %, based on the total moles of diol monomer, of the dimethylolpropionic acid.

4. A method of treating a waste PET plastic container for a purpose which includes recycling at least the PET plastic material therein, wherein the waste PET plastic container bears at least a portion of a label attached thereto by an adhesive composition which comprises a bio-derived copolyester comprising at least one diol monomer including a dimethylolpropionic acid unit and at least one diacid monomer including a succinic acid unit, together with one or more other constituents selected from the group consisting of a tackifier, a plasticizer, a film-forming agent, an anti-blocking agent, water, an extender, a filler, a stabilizer, and a colorant, wherein the method comprises comminuting the container into a plurality of subdivided pieces, at least a portion of which contain pieces of the aforesaid label material and associated adhesive attached thereto, and washing the comminuted subdivided pieces, including said portion thereof, in at least one wash cycle with a wash comprising hot aqueous solution including caustic so as to cause complete dissolution of all adhesive on said portion of pieces to provide PET plastic recyclate completely freed of all associated label and associated adhesive.

## Patentansprüche

1. Klebstoffzusammensetzung, die einen biologisch abgeleiteten Copolyester umfasst, umfassend mindestens ein Diolmonomer einschließlich einer Dimethylolpropionsäureeinheit und mindestens ein Disäuremonomer einschließlich einer Bernsteinsäureeinheit, zusammen mit einem oder mehreren anderen Bestandteilen, ausgewählt aus der Gruppe bestehend aus einem Klebrigmacher, einem Weichmacher, einem Filmbildner, einem Anti-Blockierungsmittel, Wasser, einem Streckmittel, einem Füllstoff, einem Stabilisator und einem Farbmittel, wobei das mindestens eine Diolmonomer von 4 Mol-% bis 25 Mol-%, bezogen auf die Gesamtmole des Diolmonomers, der Dimethylolpropionsäure umfasst.

2. Klebstoffzusammensetzung nach Anspruch 1, wobei der Copolyester Polypropylensuccinat umfasst.

3. PET-Kunststoffbehälter, der ein Etikett trägt, das mit einer Klebstoffzusammensetzung daran angebracht ist, die einen biologisch abgeleiteten Copolyester umfasst, umfassend mindestens ein Diolmonomer einschließlich einer Dimethylolpropionsäureeinheit und mindestens ein Disäuremonomer einschließlich einer Bernsteinsäureeinheit zusammen mit einem oder mehreren anderen Bestandteilen ausgewählt aus der Gruppe bestehend aus einem Klebrigmacher, einem Weichmacher, einem Filmbildner, einem Anti-Blockierungsmittel, Wasser, einem Streckmittel, einem Füllstoff, einem Stabilisator und einem Farbmittel, wobei das mindestens eine Diolmonomer von 4 Mol-% bis 25 Mol-%, bezogen auf die Gesamtmole des Diolmonomers, der Dimethylolpropionsäure umfasst.

4. Verfahren zur Behandlung eines PET-Kunststoff-Abfallbehälters für einen Zweck, der Recyceln von mindestens dem PET-Kunststoffmaterial darin einschließt, wobei der PET-Kunststoff-Abfallbehälter mindestens einen Teil eines Etiketts trägt, das mit einer Klebstoffzusammensetzung daran angebracht ist, die einen biologisch abgeleiteten Copolyester umfasst, umfassend mindestens ein Diolmonomer, einschließlich einer Dimethylolpropionsäureeinheit, und mindestens ein Disäuremonomer, einschließlich einer Bernsteinsäureeinheit, zusammen mit einem oder mehreren anderen Bestandteilen, ausgewählt aus der Gruppe bestehend aus einem Klebrigmacher, einem Weichmacher, einem Filmbildner, einem Anti-Blockierungsmittel, Wasser, einem Streckmittel, einem Füllstoff, einem Stabilisator und einem Farbmittel, wobei das Verfahren Zerkleinern des Behälters in eine Vielzahl von unterteilten Stücken, von denen mindestens ein Teil Stücke des vorgenannten Etikettenmaterials und des assoziierten daran angebrachten Klebstoffs enthält, und Waschen der zerkleinerten unterteilten Stücke, einschließlich des Teils davon, in mindestens einem Waschzyklus mit einer Wäsche umfasst, umfassend eine heiße wässrige Lösung, einschließlich Ätzmittel, um eine vollständige Auflösung des gesamten Klebstoffs auf dem Teil von Stücken zu bewirken, um ein PET-Kunststoff-Rezyklat bereitzustellen, das vollständig von allen assoziierten Etiketten und assoziierten Klebstoffen befreit ist.

## Revendications

1. Composition adhésive qui comprend un copolyester d'origine biologique comprenant au moins un monomère diol comprenant une unité d'acide diméthylolpropionique et au moins un monomère diacide comprenant une unité d'acide succinique, ainsi qu'un ou plusieurs autres constituants choisis dans le groupe comprenant un agent collant, un plastifiant, un agent filmogène, un agent antibloquant, de l'eau, un diluant, une charge, un stabilisant et un colorant, dans laquelle le au moins un monomère diol comprend de 4 % en mole à 25 % en mole, par rapport au nombre total de moles de monomère diol de l'acide diméthylolpropionique.

2. Composition adhésive selon la revendication 1, dans laquelle le copolyester comprend du succinate de polypropylène.

3. Récipient en plastique PET portant une étiquette fixée sur celui-ci par une composition adhésive, qui comprend un copolyester d'origine biologique comprenant au moins un monomère diol comprenant une unité d'acide diméthylolpropionique et au moins un monomère diacide comprenant une unité d'acide succinique, ainsi qu'un ou plusieurs autres constituants choisis dans le groupe comprenant un agent collant, un plastifiant, un agent filmogène, un agent antibloquant, de l'eau, un diluant, une charge, un stabilisant et un colorant, dans lequel le au moins un monomère diol comprend 4 % en mole à 25 % en mole, sur la base du nombre total de moles de monomère diol, de l'acide diméthylolpropionique.

4. Procédé de traitement d'un conteneur en plastique PET usagé à une fin qui comprend le recyclage d'au moins la matière plastique PET en son sein, dans lequel le conteneur en plastique PET usagé porte au moins une partie d'une étiquette collée sur celui-ci par une composition adhésive qui comprend un copolyester d'origine biologique comprenant au moins un monomère diol comprenant une unité d'acide diméthylolpropionique et au moins un monomère diacide comprenant une unité d'acide succinique, ainsi qu'un ou plusieurs autres constituants choisis dans le groupe comprenant un agent collant, un plastifiant, un agent filmogène, un agent antibloquant, de l'eau, un diluant, une charge, un stabilisant et un colorant, dans lequel le procédé comprend les étapes consistant à fragmenter le conteneur en une pluralité de pièces subdivisées, dont au moins une partie contient des morceaux du matériau d'étiquette susmentionné et l'adhésif associé fixé dessus, et à laver les morceaux subdivisés fragmentés, y compris sa partie, dans au moins un cycle de lavage avec un lavage comprenant une solution aqueuse comprenant de la soude caustique de manière à provoquer la dissolution complète de tout l'adhésif sur ladite partie de morceaux afin de fournir un plastique PET recyclé complètement débarrassé de toute étiquette associée et de l'adhésif associé.
